# EUROPEAN PATENT APPLICATION

(11) **EP 4 599 794 A1**
(43) Date of publication of application: **13.08.2025**
(21) Application number: 24382117.0
(22) Date of filing: 06.02.2024
(51) Int. Cl.: A61C 8/00, A61C 1/08

(54) **GUIDED SURGERY EXTENDER DEVICE FOR ORIENTING AND POSITIONING A DENTAL IMPLANT AND SYSTEM**

(71) Applicant: Tech Xika P.T.T, S.L., 25005 Lleida (ES)
(72) Inventor: Carrero Villarroel, Xavier, 25005 Lleida (ES)
(74) Representative: Carlos Hernando, Borja

(57) **Abstract**

The invention, a spanner device for guided surgery to orient and position a dental implant and system, relates to a spanner device for guided surgery which, incorporated on an implant driver, serves to orient and position the dental implant in a patient's jaw, regardless of the connection geometry of said implant, so that the same spanner device can be used to orient different types of implant, regardless of its type of connection. The invention also relates to a system formed by the above device and a driver for the coupling thereof to a dental implant.

## Description

### OBJECT OF THE INVENTION

The present invention, a spanner device for guided surgery to orient and position a dental implant, relates to a spanner device for guided surgery which, incorporated on an implant driver, serves to orient and position the dental implant in a patient's jaw, regardless of the connection geometry of said implant, which may preferably be hexagonal, square or triangular, so that the same spanner device can be used to orient different types of implant, regardless of its type of connection. To facilitate the work of professionals when they cannot see the exact orientation of the implant, the spanner device has marks or indications on its outer surface, preferably marks engraved on said surface, preferably by laser technology, which identify the geometry of the type of connection of the implant used, advantageously allowing professionals to use the same spanner device for different implant connection geometries. The invention also relates to a system formed by the above device and a driver for the coupling thereof to a dental implant.

The field of application of the present invention falls within the sector of the industry dedicated to the manufacture of medical instruments, tools and devices, focusing particularly on the field of those intended for dentistry and dental implantology, and more specifically intended for guided surgery for implant placement.

### BACKGROUND OF THE INVENTION

As is known, guided surgery for dental implants is an advanced approach that uses three-dimensional imaging technology (computed tomography, intraoral scanners, etc.) to precisely plan the placement of dental implants. With this technique, a digital model of the patient is created that allows the surgeon to plan the exact position of each implant virtually before performing surgery.

The guided surgery process involves the design of a personalised surgical guide to precisely direct the placement of the implants according to the previously established plan. To do this, sometimes the so-called implant driver is used, which, by coupling same to the implant, allows the implant to be driven and placed in the mouth. The driver incorporates a screw that is coupled to the head of the implant for the fixing thereof.

The problem is that, sometimes, when working inside the mouth, and depending on the depth at which the implant is located, professionals cannot see the exact orientation of the implant when they screw it into the patient's bone, subsequently making it difficult to correctly place the dental structure on said implant.

The objective of the present invention is the development of a new element that is coupled to the driver to facilitate the mentioned screwing operation, which is designed as a universal element that allows it to be used with different implant types, regardless of the type of connection of the implant, avoiding the need to have a specific spanner device for each connection, that is, one for a hexagonal connection, another one for a square connection and another one for a triangular connection, which are the three most common types of connection. Alternatively, spanner devices can be provided for implant connection configurations other than those mentioned above.

### DESCRIPTION OF THE INVENTION

The first object of the present invention is a spanner device for guided surgery to orient and position a dental implant according to claim 1. The spanner device object of the invention comprises a body, which is preferably tubular, with a first end with coupling means for coupling to a tightening tool and a second end, opposite the first end, with coupling means for coupling to a driver, having on its outer lateral surface at least two different series of marks or indicators to identify the position and orientation in which the connection to the implant in the driver is located when it is coupled to the spanner device.

The external surface of the body of the spanner device can have different geometries, preferably being tubular or cylindrical, and more preferably tubular or cylindrical with a flat face. More than one face or flat area can also be incorporated.

Preferably, the coupling means of the second end comprise a housing, inside the body of the spanner device, which is complementary to the coupling means of a driver for coupling a tightening tool. The coupling means of the driver for coupling to the tightening tool are thereby used as coupling means for coupling to the spanner device. Also, preferably, the coupling means for coupling to a tightening tool arranged at the first end of the spanner device are the same as the coupling means of the driver for the tightening tool.

Preferably, the spanner device comprises three different series of marks or indicators on its outer surface, each series of marks or indicators being associated with a type of connection geometry of an implant and therefore with the type of connection geometry of the driver of the implant. The series of marks identify the position of at least a first type of connection geometry of a driver and a second type of connection geometry of a driver. Preferably, they identify a third type of connection geometry of a driver.

In this way, if the spanner device is compatible with two different connection geometries of a dental implant, and therefore of an implant driver, for example, a square connection geometry and a triangular connection geometry, the spanner device will have a series of marks or indicators that will identify the square connection geometry and another series of marks or indicators that will identify the triangular connection geometry, as will the implant driver to be connected to said dental implant. In this way, when the spanner device is coupled to an implant driver with a triangular connection geometry, which in turn will be coupled to a dental implant with a triangular geometry, the series of marks on the spanner device that identify a triangular connection allow the orientation of the triangular connection of the driver and, by extension, the orientation of the triangular connection geometry of the implant, to be known. The same occurs when the above-mentioned spanner device is used with a driver with a square implant connection geometry. Thus, the series of marks on the spanner device can identify a hexagonal, square or triangular connection geometry or any other connection geometry that may occur between the dental implant and the driver.

Thus, the device object of the invention is applicable for its incorporation coupled to an implant driver in guided surgery processes, and serves as a spanner to orient and position the dental implant in the jaw, with the advantage that it is also an element of a universal nature, since it is suitable for different types of implant connection, regardless of the geometry of said connection, which may be hexagonal, square and triangular, without ruling out that they may be of another type of connection, so that the same spanner device can be used to orient different types of implant.

As mentioned, the orientation of the implant is necessary in single dental structures, since during the planning phase, the specific orientation of the dental structure is determined with respect to the position of the implant and, sometimes, when working inside the mouth, depending on the depth at which the implant is located, professionals cannot see the exact orientation of the implant when it is screwed into the patient's bone, making it difficult to correctly place the dental structure on said implant. For this reason, knowing the position and orientation of the implant in the patient's mouth is essential for correct subsequent placement of the dental structure.

The spanner device object of the invention solves this drawback since it identifies the position of the implant connection by means of series of marks or indicators on its outer surface, preferably marked by laser, although not limited to marks of this type.

To this end, and more specifically, the spanner device, made up of a tubular body with coupling means for coupling to the tightening tool at an upper end and coupling means for coupling to the driver at the opposite lower end, may have, on its outer lateral surface:
- a first series of six marks or indicators, preferably in the form of a hexagon, but without ruling out that they may have another shape, for example, an H shape, which determine the position of the six edges of a hexagonal connection of an implant;
- a second series of four marks or indicators, preferably in the form of a square, but without ruling out that they may have other shapes, for example, a C shape or an S shape, which determine the position of the four flat faces of a square connection; and
- a third series of three marks or indicators, preferably in the form of a triangle, but without ruling out that they may have other shapes, for example, a T shape, which determine the position of the three edges of a triangular connection.

Each mark preferably includes a straight line extending from the mark to the second end of the body of the spanner device, contributing to the orientation of the spanner device.

By means of the spanner device object of the invention, it is possible to work on different implants with a single compatible spanner part or device for the planned positioning for the subsequent placement of the dental structure on the implant.

To couple the spanner device correctly on the driver, the spanner device has at least one primary mark or indication on its outer surface, and the driver has another secondary mark on its outer surface, so that, when aligning the primary mark of the spanner device and the secondary mark of the driver, the coupling in the correct position of both elements is assured. Preferably the primary mark or indication of the spanner device is a dot while preferably the secondary mark or indication of the driver is a number representing the length of said driver. In any case, the primary and secondary marks or indications can be other symbols that allow their alignment, for example, an arrow, a star, numbers, geometric figures, etc.

A second object of the invention is a guided surgery system for orientation and positioning of a dental implant according to claim 10. Namely, the system object of the invention is a spanner device as described above and a driver, the latter having one end for coupling to the second end of the spanner device and an opposite end with a connection having a configuration of a variable hexagonal, square, triangular, or other geometry, identical to the connection geometry of the implant to which the driver is connected, for coupling to a dental implant by means of a tightening screw that goes through said driver, so that the series of marks on the spanner device identify the position in which the connection with which the driver has been fixed to an implant is located, regardless of the geometry of said connection, allowing the use of the same spanner device with drivers with different types of connections for different types of dental implant.

According to the above, the end for coupling the driver to the second end of the spanner device is introduced into said second end of the spanner device, with both coupling geometries thus being complementary, and aligning the primary mark of the spanner device with the secondary mark of the driver. The end for coupling the driver to the second end of the spanner device can also be used as coupling means for a tool when a spanner device is not used with the driver.

### DESCRIPTION OF THE FIGURES

To complement the description of the present invention and for the purpose of helping to understand the features thereof, a set of illustrative and non-limiting figures are included in the present specification.

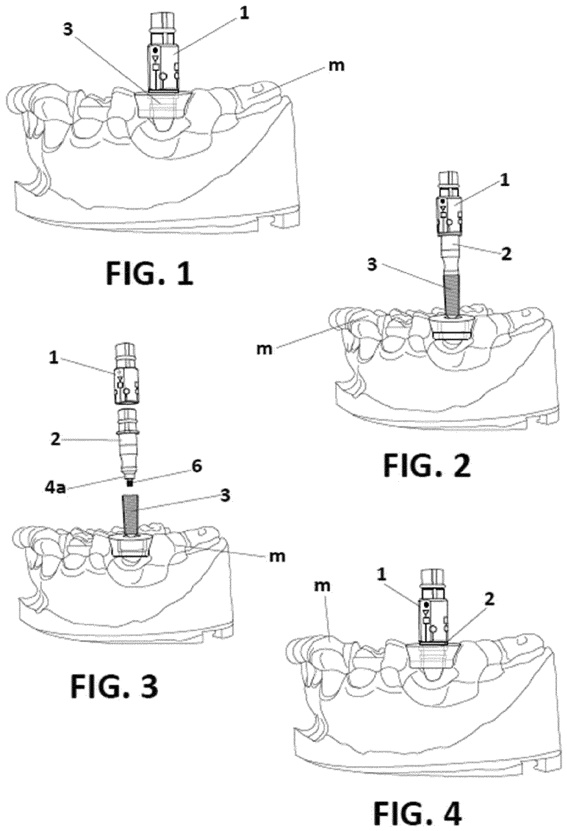

Figures 1, 2, 3 and 4 show a schematic depiction of a lower jaw in successive phases of the implant placement process using the driver and the spanner device object of the invention, showing the mode of use thereof.

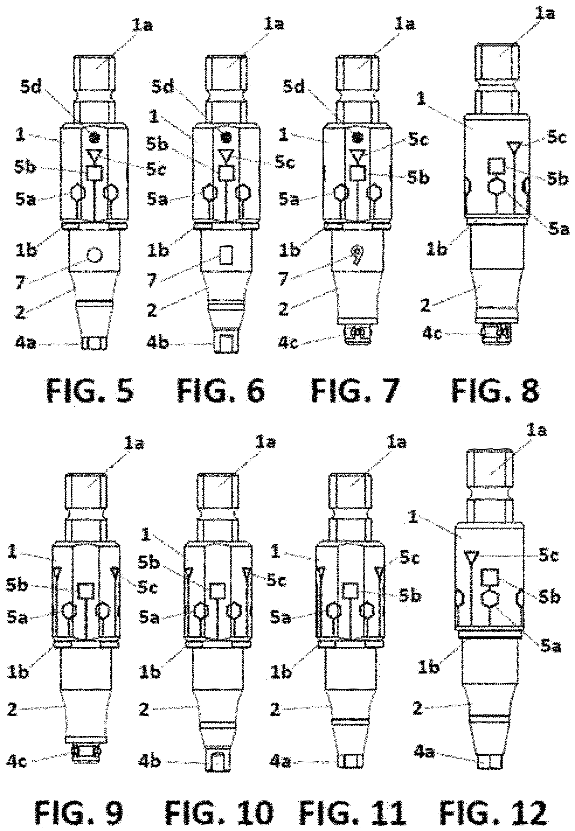

Figures 5, 6 and 7 show front elevation views of an exemplary embodiment of the spanner device of the invention, depicted respectively with three different types of driver, depending on the type of connection of the implant, specifically having a hexagonal geometry in Figure 5, a square geometry in Figure 6 and a triangular geometry in Figure 7, showing the configuration and parts thereof, especially the different series of marks that it has to identify the position of the different types of implant connection.
Figure 8 shows a side elevation view of the spanner device shown in Figures 5 to 7, in this case with the implant driver with a triangular geometry connection, showing the coincidence of the edge of the triangular connection with the mark in the form of a triangle for said type of connection.
Figures 9, 10 and 11 show front elevation views of another example of the spanner device of the invention with the three types of implant driver with a triangular, a square and a hexagonal geometry connection, respectively, in this case with a different arrangement of the series of marks.
Figure 12 shows a side elevation view of the spanner device shown in Figures 9 to 11, in this case with the implant driver with a hexagonal geometry connection, showing the coincidence of the edges of the hexagonal connection with the marks in the form of a hexagon of the series.

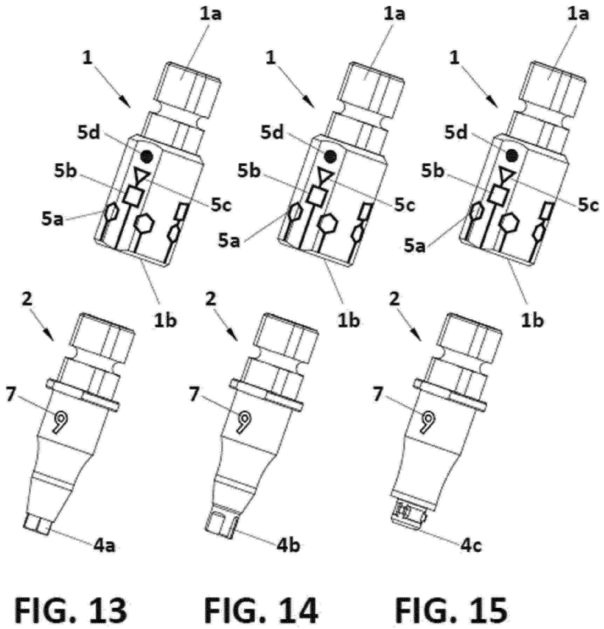

Figures 13, 14 and 15 show perspective views of the spanner device of the invention, according to the example shown in Figures 5 to 8 with the respective drivers for the three types of hexagonal, square and triangular implant connection, respectively, depicted prior to coupling in this case.

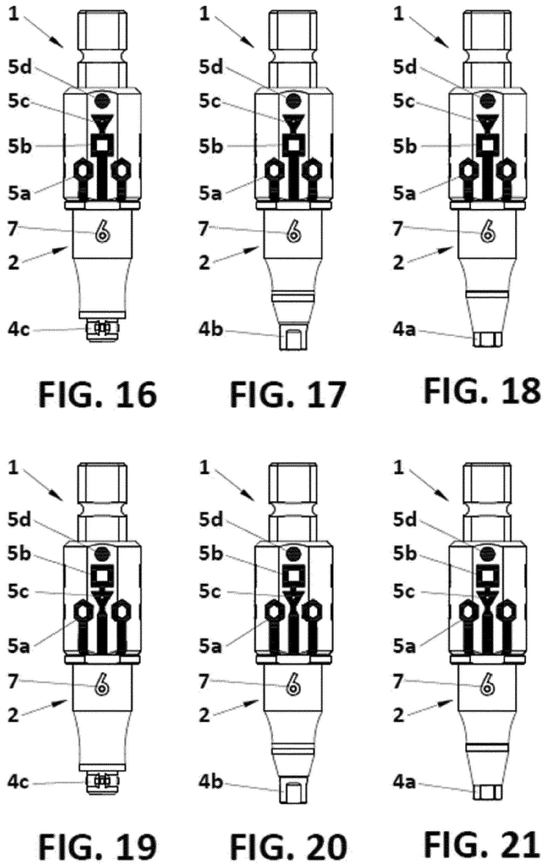

Figures 16, 17 and 18 show respective front elevation views of another example of the spanner device according to the invention with the three types of implant driver with a triangular, a square and a hexagonal connection, respectively, with the series of marks being made with thicker lines in this case.
Figures 19, 20 and 21 show respective front elevation views of another example of the spanner device according to the invention with the three types of implant driver with a triangular, a square and a hexagonal connection, respectively, with the series of marks being made with thicker lines in this case and being arranged differently.

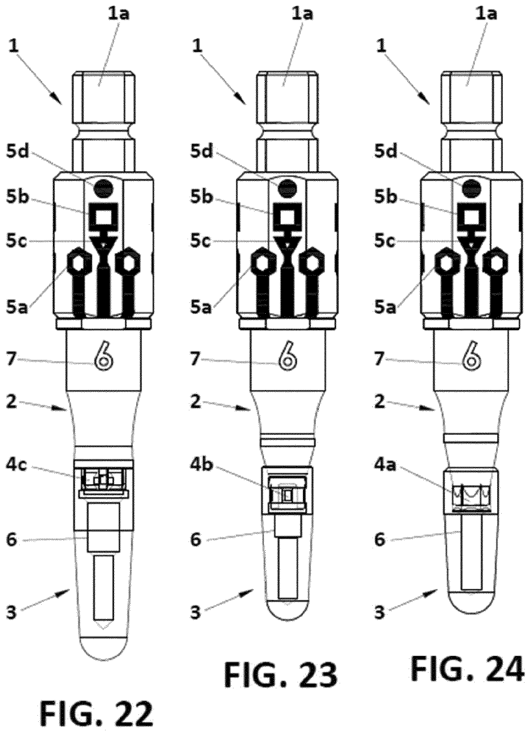

Figures 22, 23 and 24 show respective front elevation views of the example of the spanner device of the invention shown in Figures 19 to 21, with the three types of implant driver with a triangular, a square and a hexagonal connection, respectively, once incorporated in this case into the implant, which has been depicted so that the inside thereof can be seen in a dashed line.

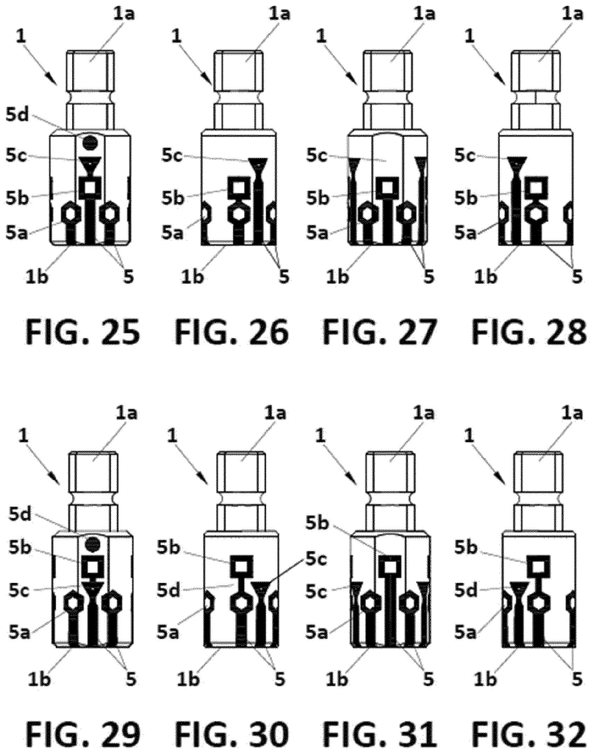

Figures 25, 26, 27 and 28 show respective front, right side, rear and left side elevation views of the example of the spanner device of the invention shown in Figures 16 to 18 and 22 to 24, showing the configuration and arrangement of the different series of marks it comprises to identify the position of each type of implant connection on the external surface thereof.
Figures 29, 30, 31 and 32 show respective front, right side, rear and left side elevation views of the example of the spanner device of the invention shown in Figures 19 to 21, showing the configuration and arrangement of the different series of marks it comprises to identify the position of each type of implant connection on the external surface thereof.

### PREFERRED EMBODIMENT OF THE INVENTION

The above figures show different non-limiting exemplary embodiments of the spanner device for guided surgery to orient and position a dental implant of the invention.

Thus, as can be seen in Figures 1 to 4, the spanner device (1) of the invention is applicable for its incorporation coupled to an implant driver (2) of the type which, in guided surgery processes, is in turn coupled to the dental implant (3), where it fits by means of a connection (4a, 4b, 4c) having a configuration according to the connection inside the implant (3), and which can be of a variable geometry, for example hexagonal, square or triangular, without ruling out other geometries, allowing the screwing of said implant (3) into the patient's jaw (m) to be oriented and directed more easily through the tightening of a screw (6) that goes through the driver (2) with a tool intended for this purpose (not shown in the figures).

To this end, said spanner device (1) is made up of a body, which is preferably tubular, which, at an upper end (1a), comprises coupling means for coupling to a tightening tool; at the opposite lower end (1b), it comprises means coupling means for coupling to a driver (2), preferably a cavity or housing; and, on its outer lateral surface, it comprises a series of marks (5a, 5b, 5c), preferably three series of marks, which identify the position in which the connection (4a, 4b, 4c) with which the driver (2) has been fixed to an implant (3) is located, regardless of the geometry of said connection, and at least in three different types of connection, allowing the use of the same spanner device (1) with different drivers (2) with different types of connection (4a, 4b, 4c) for different types of dental implant (3) that have the same connection as the drivers (4a, 4b, 4c). Alternatively, the spanner device may have two series of marks for two different types of connections or four series of marks for four different types of connections or more series of marks for more different types of connections.

Preferably, the series of marks (5a, 5b, 5c) that the spanner device (1) comprises on the outer lateral surface thereof identify the position of at least one hexagonal geometry connection (4a), one square geometry connection (4b) and one triangular geometry connection (4a, 4b, 4c).

To this end, the spanner device (1) preferably comprises:
- a first series of six marks (5a), preferably a hexagon, but without ruling out that they could be others, such as an H, with each mark of the series identifying the position of the six edges of a hexagonal connection (4a) of the driver (2) with an implant (3);
- a second series of four marks (5b), preferably a square, but without ruling out that they could be others, such as a C or an S, with each mark of the series identifying the position of the four flat faces of a square connection (4b) of the driver (2) with an implant (3); and
- a third series of three marks (5c), preferably a triangle, but without ruling out that they could be others, such as a T, with each mark of the series identifying the position of the three edges of a triangular connection (4c) of the driver (2) with an implant (3).

Each mark preferably includes a line extending from the mark (5a, 5b, 5c) to the second end (1b) of the body of the spanner device (1).

It should be noted that when it is indicated that the series of marks (5a, 5b, 5c) identify the position of any of the, at least in the present example, three types of connection (4a, 4b, 4c) with which the driver (2) is coupled to the implant (1), it must be understood that it indicates or shows the position in which a specific area of the geometry of said connections (4a, 4b, 4c) is located, so that the operator can know in what position the connection is located and, therefore, in what position the implant (3) is being screwed in, regardless of the type of connection it has, at least among the three types mentioned.

Thus, the spanner device (1) preferably comprises a first series of six first marks (5a) in the form of a hexagon, a second series of four second marks (5b) in the form of a square, and a third series of three third marks (5c) in the form of a triangle, all of them being distributed radially and respectively on the lateral surface of the body of the spanner device (1). Said body is preferably substantially cylindrical on its outer surface except for preferably two flat areas or faces (1c) on opposite sides thereof that facilitate the identification of a front and a rear position to place it in correspondence with the position of the corresponding connection (4a, 4b, 4c) of the driver (2) to which it is coupled. These flat areas have been referenced in figures 25 to 32, where they can be seen more clearly. Alternatively, the body of the spanner device (1) may not incorporate any flat faces, or only one, or three, or more, in which flat faces with curved surfaces occur in succession. Likewise, the body (1) may not be cylindrical and may be made up of different flat faces, determined by geometric sections, triangular sections, square sections, pentagonal sections, etc.

Alternatively or complementary, instead of, or in addition to, a flat face, area or surface (1c), the body of the spanner device (1) may have another mark or indication, a primary mark, for example a dot (5d), which contributes to determining a specific position of the spanner device (1). The flat face or faces (1c) of the body of the spanner device (1) and/or the primary mark or dot (5d), allow the spanner device (1) to be correctly coupled to the driver (2), which will also conveniently have one or more flat faces and/or a secondary mark (7), equal to or different from the primary mark (5d) of the spanner device (1) to facilitate the correct coupling between both components (1, 2) when aligning said primary mark (5d) of the spanner device (1) and said secondary mark (7) of the driver (2).

According to the above, Figures 5, 6 and 7 show a dot as the primary mark (5d) of the spanner device (1) while the secondary mark (7) of the driver (2) is a dot, a rectangle and a number 9, respectively. Said primary mark (5d) and secondary mark (7) can be different symbols, letters, numbers, etc. Likewise, in Figures 13 to 24, a dot has been depicted as the primary mark (5d) of the spanner device (1), while the secondary marks (7) of the driver (2) depicted in Figures 13 to 15 are a number, being a six or a nine in these examples, but it could be any other number and could represent a distance between different parts of the driver (7) itself.

To this end, in a preferred embodiment, all the series of marks (5a, 5b, 5c) on the external lateral surface of the spanner device (1) are associated with vertical extension lines (5) that run from the mark in question to the lower end (1b) of the body of the spanner device (1) where it is coupled to the corresponding driver (2). These lines have been referenced in figures 25 to 32, where they can be seen more clearly.

As can be seen in the figures, some of the marks (5a, 5b, 5c) share the same vertical extension line (5), as the edge or face of the corresponding connection (4a, 4b, 4c) coincides, and either of them can be located in a position further away from or in a position not as far away from the lower end (1b) to avoid overlaps, and may have different positions, as seen in Figures 16 to 18 and Figures 19 to 21.

Furthermore, the spanner device (1) preferably comprises, as mentioned above, a primary mark (5d) that identifies a position for coupling same to the driver (2), which has a secondary mark (7). Preferably, said primary mark (5d) is in the form of a dot, while the secondary mark (7) of the driver (2) is preferably a number that represents the length of the driver (2), so that said mark will vary depending on the length of the driver.

Likewise, preferably, the series of marks (5a, 5b, 5c), whether geometric figures or letters, are lines engraved by laser on the surface of the body of the spanner device (1), without ruling out that they may be of another type.

Moreover, and preferably, the lines that make up the series of marks (5a, 5b, 5c) have a thickness of 0.8 millimetres so that the operator can see them well, without ruling out that they may have other thicknesses, preferably between 0.1 and 1.5 millimetres.

Figures 1 to 4 show a lower jaw (m) in which an implant (3) is going to be placed, showing (mainly in Figures 2 and 3) the implant (3) with the threaded surface, the driver (2) of the implant (3), with the corresponding connector (4) at the end thereof to lock onto the implant (3) and the screw (6) that goes through same to screw in the implant (3), and the spanner device (1) which is arranged on the driver (2).

The implant placement process (3) has the following stages or steps:
- inserting the driver (2) into the implant (3), preferably by means of a screw (6) that goes through the driver (2) and is screwed onto the implant, although screwless drivers could be used,
- coupling the spanner device (1) on the driver (2), introducing the coupling means of the driver (2) into the second end (1b) of the spanner device (1);
- screwing the implant (3) into the patient's bone by acting on the coupling means (1a) of the spanner device (1) coupled to the driver (2), thus forcing the rotation of the implant in the bone;
- acting on the spanner device (1) so that, depending on the type of geometry of the connection (4a, 4b, 4c) of the dental implant (hexagonal, square or triangular), said implant (3) is positioned in the planned position for the subsequent coupling of the dental structure on the implant (3).

Figures 1 to 4 also show a guided surgery system for orientation and positioning of a dental implant, characterised in that it comprises:
- a spanner device (1) as indicated above, and
- a driver (2) with one end for coupling to the second end of the spanner device (1) and an opposite end with a connection (4a, 4b, 4c) for the coupling thereof to a dental implant (3) by means of a tightening screw (6) that goes through said driver (2),
so that the series of marks (5a, 5b, 5c) of the device (1) identify the position in which the connection (4a, 4b, 4c) with which the driver (2) has been fixed to an implant (3 ) is located, regardless of the geometry of said connection, allowing the use of the same spanner device (1) with drivers (2) with a different type of connection (4a, 4b, 4c) for different types of dental implant (3).

## Claims

1. A spanner device (1) for guided surgery to orient and position a dental implant, **characterised in that** it comprises a body with a first end (1a) with coupling means for coupling to a tightening tool and a second end (1b), opposite the first end (1a), with coupling means for coupling to a driver (2), having on its outer lateral surface at least two different series of marks or indicators (5a, 5b, 5c) to identify the position in which the connection to the implant (4a, 4b, 4c) in the driver (2) is located when it is coupled to the spanner device (1).

2. The device (1) according to claim 1, **characterised in that** the series of marks (5a, 5b, 5c) identify the position of at least a first type of connection geometry (4a) of a driver (2) and a second type connection geometry (4b) of a driver (2).

3. The device (1) according to claim 2, **characterised in that** the series of marks (5a, 5b, 5c) identify the position of a first type of connection geometry (4a) of a driver (2), a second type of connection geometry (4b) of a driver (2), and a third type of connection geometry (4c) of a driver.

4. The device (1) according to any of the preceding claims, **characterised in that** the series of marks identify a hexagonal, square or triangular connection geometry or any other connection geometry between a dental implant and a driver.

5. The device (1) according to any of the preceding claims, **characterised in that** it comprises:
- a first series of six marks (5a) consisting of a hexagon or an H, which identify the position of six edges of a hexagonal connection (4a) of a driver (2) to an implant (3);
- a second series of four marks (5b) consisting of a square or a C or an S, which identify the position of four flat faces of a square connection (4b) of a driver (2) to an implant (3); and
- a third series of three marks (5c) consisting of a triangle or a T, which identify the position of three edges of a triangular connection (4c) of a driver (2) to an implant (3).

6. The device (1) according to any of the preceding claims, **characterised in that** all the marks (5a, 5b, 5c) are associated with vertical extension lines (5) that run from the mark (5a, 5b, 5c) in question to the second end (1b) of the body where it is coupled to the corresponding driver (2).

7. The device (1) according to any of the preceding claims, **characterised in that** it comprises a secondary mark (5d) that identifies a position thereof.

8. The device (1) according to any of the preceding claims, **characterised in that** the marks (5a, 5b, 5c) are lines engraved by laser on the surface of the body of the spanner device (1).

9. The device (1) according to any of the preceding claims, **characterised in that** the marks (5a, 5b, 5c) are lines that have a thickness of between 0.1 and 1.5 millimetres.

10. The device (1) according to claim 8, **characterised in that** the marks (5a, 5b, 5c) are lines that have a thickness of 0.8 millimetres.

11. A guided surgery system for orientation and positioning of a dental implant, **characterised in that** it comprises:
- a spanner device (1) according to any of claims 1 to 10, and
- a driver (2) with one end for coupling to the second end of the device (1) and an opposite end with a connection (4a, 4b, 4c) for the coupling thereof to a dental implant (3) by means of a tightening screw (6) that goes through said driver (2),
so that the series of marks (5a, 5b, 5c) of the device (1) identify the position in which the connection (4a, 4b, 4c) with which the driver (2) has been fixed to an implant (3 ) is located, regardless of the geometry of said connection, allowing the use of the same spanner device (1) with drivers (2) with a different type of connection (4a, 4b, 4c) for different types of dental implant (3).
